# EUROPEAN PATENT APPLICATION

(11) **EP 2 846 314 A1**
(43) Date of publication of application: **11.03.2015**
(21) Application number: 13195944.7
(22) Date of filing: 05.12.2013
(51) Int. Cl.: G07D 11/00, G07F 19/00

(54) **Light-emitting mounting structure of a valuable document acceptor**

(30) Priority: 04.09.2013 TW 102216636
(71) Applicant: International Currency Technologies Corporation, Taipei (TW)
(72) Inventor: Chang, Chia-Min, TAIPEI (TW); Yu, Cheng-Kang, TAIPEI (TW)
(74) Representative: Glawe, Delfs, Moll

(57) **Abstract**

A light-emitting mounting structure for valuable document acceptor includes a main unit defining a front opening and a bill passage, LEDs mounted in the main unit and respectively arranged at opposing top and bottom sides relative to the front opening, a face panel mounted at the front side of the main unit and defining a bill insertion slot having a diverging front open side for the insertion of a valuable document into the bill passage, light diffuser panels respectively mounted in the face panel for diffusing light toward the diverging front open side of the bill insertion slot, and a light guide plate mounted in the face panel and adapted to guide emitted light from the LEDs toward the light diffuser panels. This design allows adjustment of the amount of installed LEDs and their installation locations.

## Description

This application claims the priority benefit of Taiwan patent application number 102216636, filed on September 4, 2013.

### BACKGROUND OF THE INVENTION

### 1. Field of the Invention:

The present invention relates to bill acceptor technology, and more particularly, to a light-emitting mounting structure for valuable document acceptor, which has light diffuser panels and a light guide plate mounted in a face panel thereof around a diverging front open side of a bill insertion slot in the face panel for guiding and diffusing emitted light from light-emitting devices to illuminate the diverging front open side of the bill insertion slot in the dark. This design also allows adjustment of the amount of installed light-emitting devices and their installation locations.

### 2. Description of the Related Art:

Following fast development of modern technology, convenience and rapidness have become important demands in our modern daily life. Nowadays, different automatic vending machines, card dispensers, ticket machines and bill exchange machines are used everywhere to sell different products without serviceman. These machines are highly appreciated for the advantage of saving much labor and bringing convenience to people.

In our daily life, we use cash, coins, checks, credit card, cash card, debit card or intelligent card to pay for purchases. However, some particular places, such as amusement center, park, hotel, casino, etc., may not accept credit card. These particular places may simply accept predetermined valuable documents, such as paper tokens or special securities for access or payment. Various valuable document acceptors of different models, sizes and functions are commercially available and widely used for receiving and verifying different valuable documents. Valuable document acceptors may be installed in corner areas in different places. These valuable document acceptors commonly provide "instructions for use" at the face panel around the valuable document insertion slot. However, an aged or young person may be unable to read the instructions for use clearly due to poor vision or insufficient lamination, leading to inconvenience.

In order to solve the aforesaid problem, some valuable document acceptor manufacturers install light source means in the machine for emitting light to illuminate the valuable document insertion slot. However, because a valuable document acceptor has bill box, power drive, push member, transmission mechanism, sensor device, recognition device, power unit, anti-theft device, and many other component parts mounted therein, there is not much space left for the installation of light source means. Thus, only a limited amount of light-emitting devices can be installed in a valuable document acceptor around the valuable document insertion slot, i.e., the number of light-emitting devices and their installation locations are limited. In this situation, even if there is sufficient illumination in the surrounding area around the installation location of the valuable document acceptor, the installed light-emitting devices in the valuable document acceptor may be unable to provide sufficient illumination to the marked instructions for use, and a user may be unable to read the instructions for use clearly. Thus, how to solve this problem is an important subject to every provider or person involved in this field.

### SUMMARY OF THE INVENTION

The present invention has been accomplished under the circumstances in view. It is therefore one object of the present invention to provide a light-emitting mounting structure for valuable document acceptor, which uses light diffuser panels to diffuse light emitted by light-emitting devices, giving sufficient illumination to a diverging front open side of a bill insertion slot thereof in the dark. It is therefore another object of the present invention to provide a light-emitting mounting structure for valuable document acceptor, which uses a light guide plate to guide light emitted by light-emitting devices toward light diffuser panels, enabling the light diffuser panels to diffuse light toward the diverging front open side of the bill insertion slot for illumination. Subject to this arrangement, the amount of light-emitting devices and their installation locations can be adjusted and, different colors of light-emitting devices can be used and controlled to provide different color patterns and/or flashing patterns, attracting consumers and fitting different requirements.

### BRIEF DESCRIPTION OF THE DRAWINGS

FIG. 1 is an oblique top elevational view of a light-emitting mounting structure for valuable document acceptor in accordance with the present invention.
FIG. 2 is an exploded view of the light-emitting mounting structure for valuable document acceptor in accordance with the present invention.
FIG. 3 is an exploded view of the face panel of the light-emitting mounting structure for valuable document acceptor in accordance with the present invention.
FIG. 4 corresponds to FIG. 3 when viewed from another angle.
FIG. 5 is a sectional side view of the light-emitting mounting structure for valuable document acceptor in accordance with the present invention.
FIG. 6 is an enlarged view of Part A of FIG. 5.

### DETAILED DESCRIPTION OF THE PREFERRED EMBODIMENT

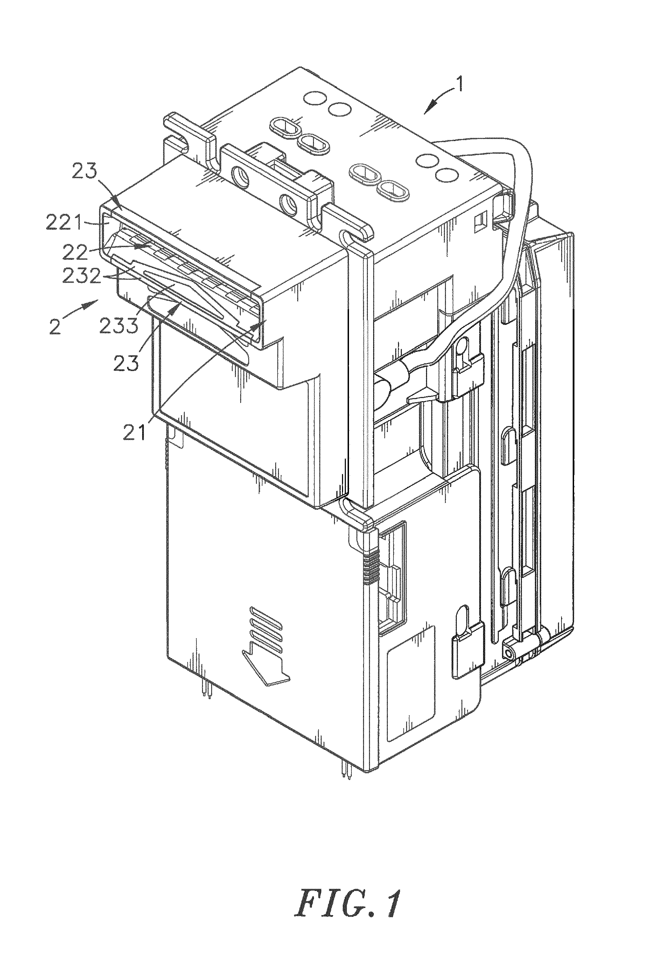

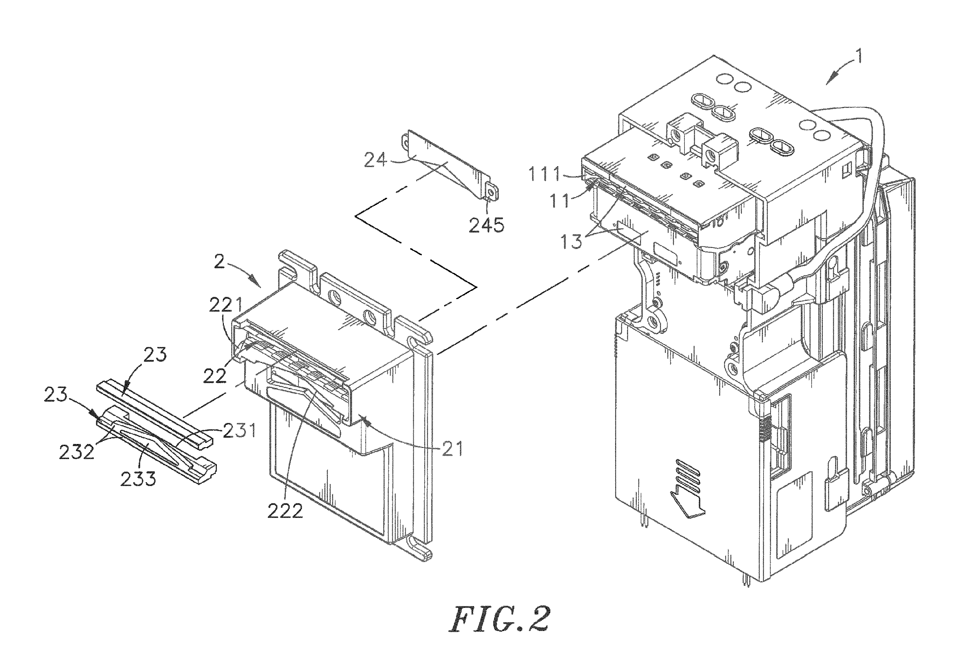

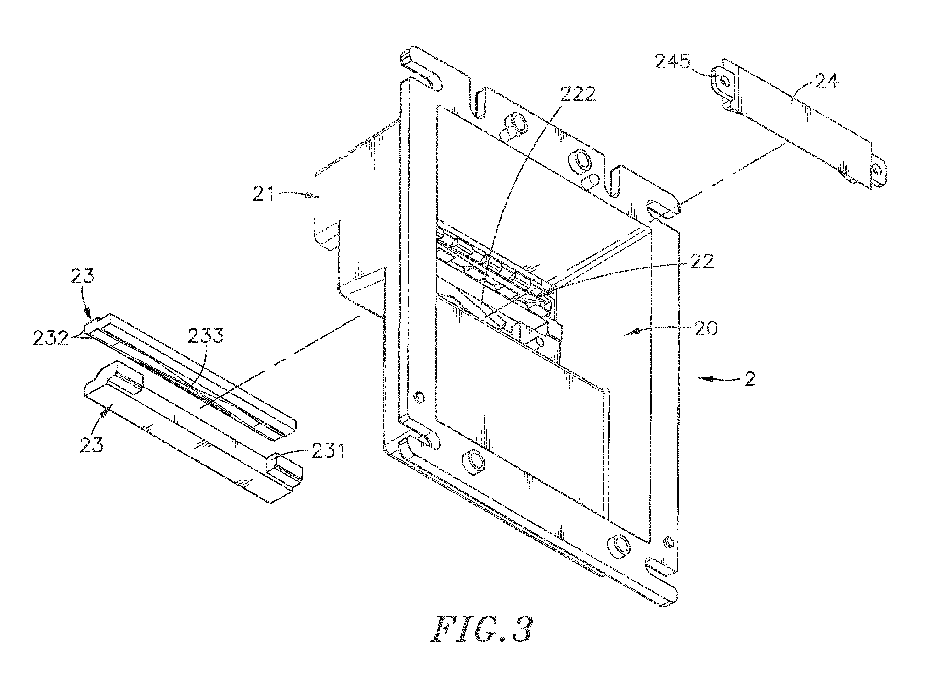

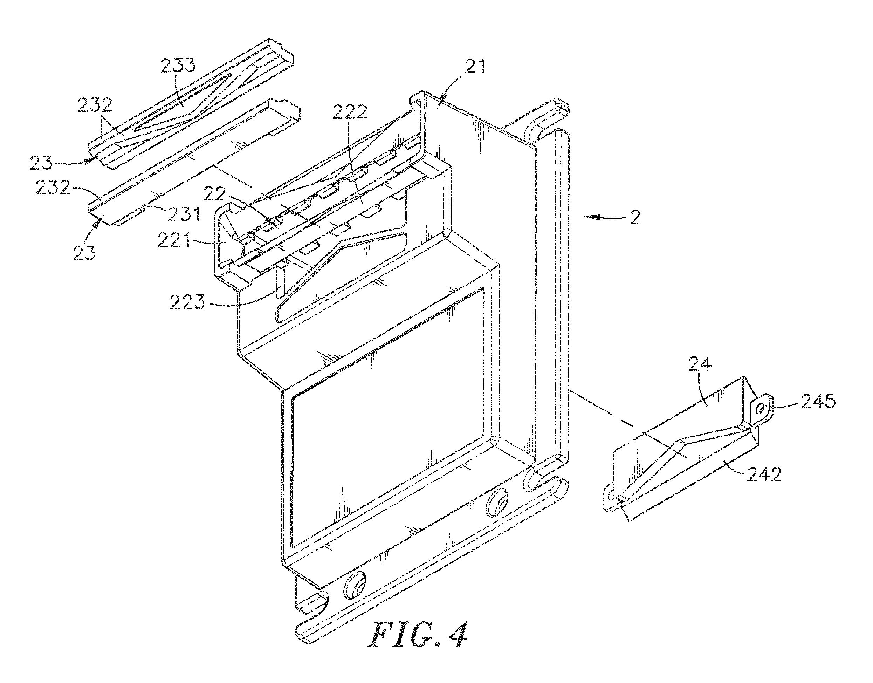

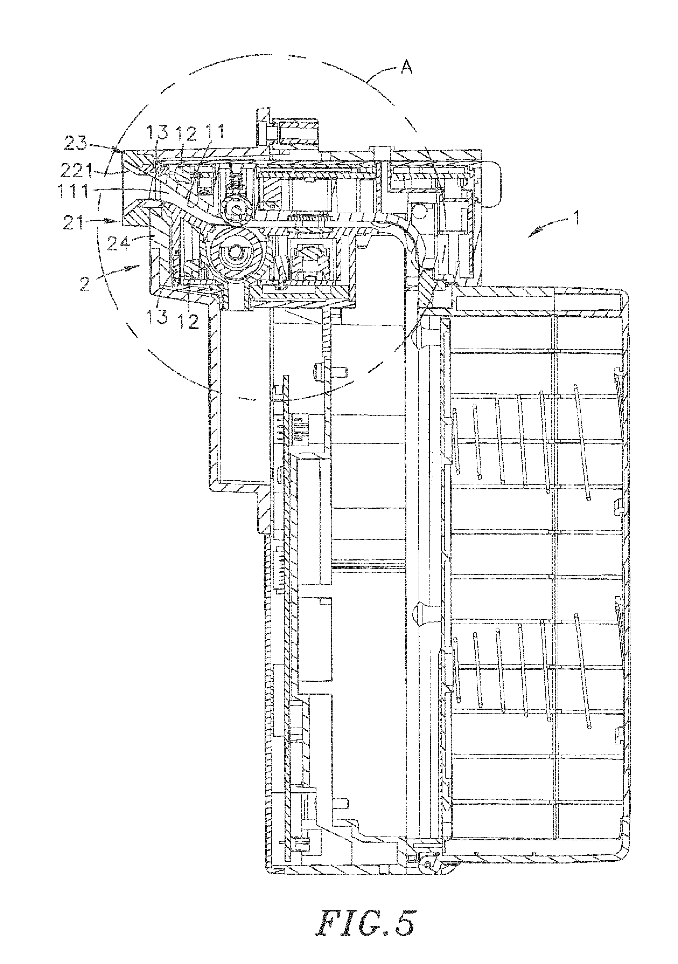

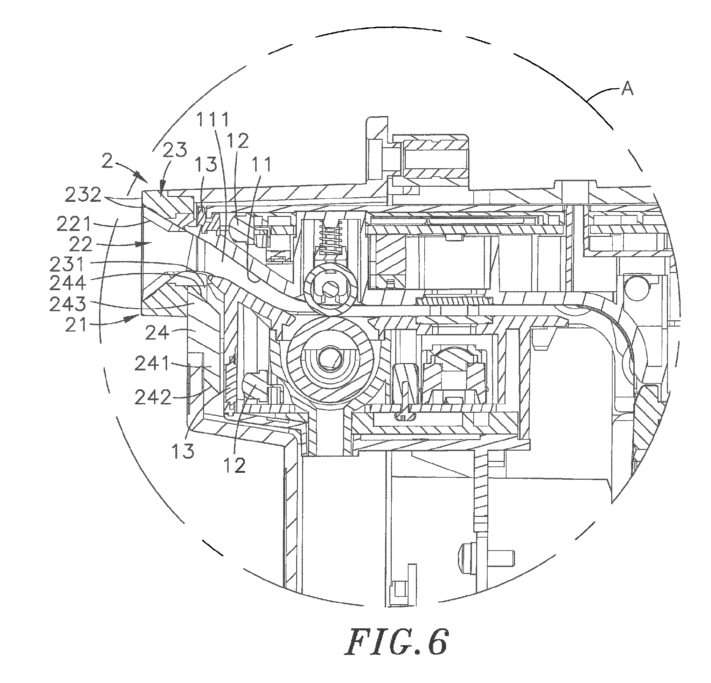

Referring to FIGS. 1-6, a light-emitting mounting structure for valuable document acceptor in accordance with the present invention is shown. The light-emitting mounting structure for valuable document acceptor comprises a main unit **1,** and a face panel **2.**

The main unit **1** comprises a bill passage **11,** a front opening **111** obliquely disposed at a front side thereof in communication with the bill passage **11,** a plurality of light-emitting devices **12,** for example, light-emitting diodes mounted therein and respectively arranged at opposing top and bottom sides relative to the front opening **111** and controllable to emit light forwardly toward the outside of the main unit **1,** and at least one light transmission board **13** mounted at the front side and covered over the light-emitting devices **12.** Further, at least one light-emitting device **12** is kept apart from the front opening **111** at a predetermined distance.

The face panel **2** comprises an accommodation open chamber **20** defined in a back side thereof for accommodating a front part of the main unit **1,** a front protruding block **21** located at a front side thereof, a bill insertion slot **22** formed in the front protruding block **21** and kept in communication with the front opening **111** and bill passage **11** of the main unit **1** for the insertion of a valuable document (paper money, security, coupon, paper token or check) and defining a diverging front open side **221,** a plurality of mounting slots **222** respectively disposed at opposing top and bottom sides relative to the diverging front open side **221** of the bill insertion slot **22** and kept in communication with the accommodation open chamber **20,** and a mounting hole **223** disposed below the mounting slots **222** and the bill insertion slot **22.**

Further, two light diffuser panels **23** are respectively mounted in the mounting slots **222** of the face panel **2.** Further, at least one light guide plate **24** is mounted in the mounting hole **223** of the face panel **2.** Each light diffuser panel **23** comprises a locating groove **231,** a light-exit surface **232** fitting the top or bottom side of the diverging front open side **221** of the bill insertion slot **22,** and an index mark **233** located at the light-exit surface **232.** Preferably, the light-exit surface **232** is frosted. The light guide plate **24** comprises a light-incident surface **241** facing toward the light-emitting devices **12,** a first reflective surface **242,** a light-exit surface **243** positioned in the locating grooves **231** of the light diffuser panels **23** and facing toward the light diffuser panel **23,** a second reflective surface **244,** and two mounting lugs **245** located at two opposite lateral sides thereof and respectively affixed to the face panel **2.** The first reflective surface **242** and the second reflective surface **244** are adapted to reflect light toward the light-exit surface **243.**

Further, the light-emitting devices **12** disposed at the top side relative to the front opening **111** of the main unit **1** are controllable to emit light toward the light diffuser panel **23** in the mounting slot **222** at the top side relative to the diverging front open side **221** of the bill insertion slot **22;** the light-emitting devices **12** disposed at the bottom side relative to the front opening **111** of the main unit **1** are controllable to emit light through the light guide plate **24** toward the light diffuser panel **23** in the mounting slot **222** at the bottom side relative to the diverging front open side **221** of the bill insertion slot **22.** However, this arrangement is simply an example for illustration only, but not intended for use to limit the scope of the claims of the invention.

Further, the light diffuser panels **23** and the light guide plate **24** can be formed in the face panel **2** by injection molding. Alternatively, the light diffuser panels **23** and the light guide plate **24** can be separately made, and then affixed to the face panel **2** by screws, adhesive, hook joint, ultrasonic sealing, or any other mounting techniques. Alternatively, the light diffuser panels **23** can be formed in the face panel **2** by injection molding, and the light guide plate **24** can be separately made and then affixed to the face panel **2** by screws, adhesive, hook joint, ultrasonic sealing, or any other mounting techniques.

Because the internal space of the main unit **1** is limited and because there are sensors, electronic components and a driving mechanism to be mounted inside the main unit at opposing top and bottom sides relative to the front opening **111** and the bill passage **11,** available installation space is limited. Further, the face panel **2** has a thin wall thickness and does not have any circuit board mounted therein, the amount and installation locations of the light-emitting devices **12** must be properly controlled. If the brightness of the emitted light is insufficient, the instruction and lighting functions of the machine will be diminished. Subject to the function of the light guide plate **24,** the light-emitting devices **12** can be mounted in the main unit **1** at a location far from the front opening **111,** i.e., the use of the light guide plate **24** facilitates spatial arrangement to fit different machines of different designs, models or configurations. Further, under the condition of sufficient installation space, the number of light-emitting devices **12** can be relatively increased to enhance the brightness. Further, different colors of light-emitting devices **12** can be used and controlled to provide different color patterns and/or flashing patterns, attracting consumers and fitting different requirements.

Further, the configuration of the front protruding block **21** of the face panel **1** is not a requisite design. Alternatively, the face panel **1** can be made having a flat front wall wherein the bill insertion slot **22** is formed in the flat front wall; the light diffuser panels **23** and the light guide plate **24** are mounted in the flat front wall of the face panel **1** in a flush manner.

During application, the light-emitting mounting structure for valuable document acceptor has features and advantages as follows:
1. When the light-emitting devices **12** at the opposing top and bottom sides relative to the front opening **111** of the main unit **1** are controlled to emit light toward the light diffuser panels **23** directly or through the light guide plate **24,** providing sufficient illumination to the diverging front open side **221** of the bill insertion slot **22** in the dark, enabling a user to insert a predetermined valuable document accurately into the diverging front open side **221** of the bill insertion slot **22.**
2. Subject to the use of the light guide plate **24,** some light-emitting devices **12** can be mounted in the main unit **1** at a certain distance from the front opening **111** of the main unit **1,** enabling the emitted light to be guided by the light guide plate **24** toward the respective light diffuser panel **23** and then diffused by the respective light diffuser panel **23** to illuminate the diverging front open side **221** of the bill insertion slot **22;** further, different colors of light-emitting devices **12** can be used and controlled to provide different color patterns and/or flashing patterns, attracting consumers and fitting different requirements.

In conclusion, the invention provides a light-emitting mounting structure for valuable document acceptor, which comprises a main unit **1** that comprises a bill passage **11,** a front opening **111** obliquely disposed at a front side thereof in communication with the bill passage **11** and a plurality of light-emitting devices **12** mounted therein and respectively arranged at opposing top and bottom sides relative to the front opening **111,** a face panel **2** that is mounted at the front side of the main unit and that comprises a bill insertion slot **22** kept in communication with the front opening **111** and bill passage **11** of the main unit **1** for the insertion of a valuable document and defining a diverging front open side **221,** a plurality of mounting slots **222** respectively disposed at opposing top and bottom sides relative to the diverging front open side **221** of the bill insertion slot **22** and a mounting hole **223** disposed below the mounting slots **222** and the bill insertion slot **22,** two light diffuser panels **23** respectively mounted in the mounting slots **222** of the face panel **2,** and at least one light guide plate **24** mounted in the mounting hole **223** of the face panel **2.** Thus, the light-emitting devices **12** can be controlled to emit light toward the light diffuser panels **23** directly or through the light guide plate **24,** providing sufficient illumination to the diverging front open side **221** of the bill insertion slot **22** in the dark, enabling a user to insert a predetermined valuable document accurately into the diverging front open side **221** of the bill insertion slot **22.** Further, different colors of light-emitting devices **12** can be used and controlled to provide different color patterns and/or flashing patterns, attracting consumers and fitting different requirements.

Although a particular embodiment of the invention has been described in detail for purposes of illustration, various modifications and enhancements may be made without departing from the spirit and scope of the invention. Accordingly, the invention is not to be limited except as by the appended claims.

## Claims

1. A light-emitting mounting structure for valuable document acceptor, comprising:
a main unit comprising a bill passage defined therein, a front opening disposed at a front side thereof in communication with said bill passage, and a plurality of light-emitting devices mounted therein and respectively arranged at opposing top and bottom sides relative to said front opening and controllable to emit light forwardly toward the outside of said main unit, at least one light-emitting device being kept away from said front opening at a predetermined distance;
a face panel mounted at the front side of said main unit, said face panel comprising a bill insertion slot kept in communication with said front opening and said bill passage of said main unit for the insertion of a valuable document, said bill insertion slot defining a diverging front open side;
a plurality of light diffuser panels respectively mounted in said face panel at opposing top and bottom sides relative to said diverging front open side of said bill insertion slot and adapted for diffusing light toward said diverging front open side of said bill insertion slot; and
at least one light guide plate mounted in said face panel and adapted to guide emitted light from said light-emitting devices toward at least one said light diffuser panel.

2. The light-emitting mounting structure for valuable document acceptor as claimed in claim 1, wherein said main unit further comprises at least one light transmission board mounted at the front side thereof and covered over said light-emitting devices.

3. The light-emitting mounting structure for valuable document acceptor as claimed in claim 1, wherein each said light guide plate comprises a light-incident surface facing toward said light-emitting devices for receiving light emitted by said light-emitting devices, a first reflective surface, a light-exit surface facing toward at least one said light diffuser panel and a second reflective surface, said first reflective surface and said second reflective surface being adapted to reflect light toward said light-exit surface.

4. The light-emitting mounting structure for valuable document acceptor as claimed in claim 3, wherein each said light guide plate further comprises two mounting lugs located at two opposite lateral sides thereof and respectively affixed to said face panel.

5. The light-emitting mounting structure for valuable document acceptor as claimed in claim 1, wherein said face panel further comprises a plurality of mounting slots respectively disposed at opposing top and bottom sides relative to said diverging front open side of said bill insertion slot, and a mounting hole disposed at a bottom side relative to said mounting slots and said bill insertion slot; said light diffuser panels respectively mounted in said mounting slots of said face panel; said at least one light guide plate is mounted in said mounting hole of said face panel.

6. The light-emitting mounting structure for valuable document acceptor as claimed in claim 1, wherein each said light diffuser panel comprises a light-exit surface fitting one of opposing top and bottom sides of said diverging front open side of said bill insertion slot, and an index mark located at said light-exit surface, said light-exit surface of each said light diffuser panel being frosted.

7. The light-emitting mounting structure for valuable document acceptor as claimed in claim 1, wherein said face panel further comprises a front protruding block located at a front side thereof; said bill insertion slot is formed in said front protruding block and kept in communication with said front opening and said bill passage of said main unit.

8. The light-emitting mounting structure for valuable document acceptor as claimed in claim 1, wherein said front opening of said main unit slopes at a predetermined angle.
